Europäisches Patentamt

European Patent Office

Office européen des brevets

(11) Veröffentlichungsnummer: **0 234 180**
**A1**

(12) **EUROPÄISCHE PATENTANMELDUNG**

(21) Anmeldenummer: 86890349.3

(22) Anmeldetag: 18.12.86

(51) Int. Cl.³: **F 41 G 1/38**
**G 02 B 23/00**

(30) Priorität: 18.12.85 AT 3667/85

(43) Veröffentlichungstag der Anmeldung:
02.09.87 Patentblatt 87/36

(84) Benannte Vertragsstaaten:
AT BE CH DE ES FR GB GR IT LI LU NL SE

(71) Anmelder: Basta, Walter
Zanaschkagasse 12/29/3
A-1120 Wien(AT)

(72) Erfinder: Basta, Walter
Zanaschkagasse 12/29/3
A-1120 Wien(AT)

(74) Vertreter: Gibler, Ferdinand, Dipl.Ing.Dr.tech.
Dorotheergasse 7/14
A-1010 Wien(AT)

(54) Zielfernrohr mit automatischer Einstellung der Elevation durch E-Motor.

(57) Zielfernrohr für Scharfschützengewehre mit einem in an sich bekannter Weise schwenkbarem Innenrohr (5) mit variabler Vergrößerung und konstantem Absehen (31), wobei in das konstant bleibende Ringabsehen (34) ein Zielgegenstand von bekannter Größe mit Hilfe der variablen Vergrößerung, die einer bestimmten Entfernung zugeordnet ist, immer gleich groß hineinvergrößerbar ist und daß die dadurch gegebene Entfernungsmessung an einem Stellring (20) albesbar ist.

Fig.1

EP 0 234 180 A1

- 1 -

ZIELFERNROHR MIT AUTOM.EINSTELLUNG DER ELEVATION DURCH E-MOTOR

Scharfschützengewehre unterscheiden sich von Jagdgewehren mit Zielfernrohr und militärischen Sturmgewähren hauptsächlich durch ihre viel größere Einsatzentfernung, weshalb am Zielfernrohr Mittel zur Einstellung der Elevation entsprechend der Ballistik der verwendeten Patrone erforderlich sind. Zumeist bestehen diese aus einer Höhenverstelltrommel, die an ihrem Umfang die Einstellmarken für die betreffende Entfernung eingraviert hat.

Das Hauptproblem für den Scharfschützen besteht aber in der Entfernungsbestimmung, deren Resultat er auf der Höhenverstelltrommel einzustellen hat. Da die Einsatzentfernung für Scharfschützengewehre, je nach verwendeter Patrone, bis etwa 1000 m reicht, ist der Schütze bei den unterschiedlichen Gelände-und Sichtverhältnissen total überfordert. Es ist daher beim Entfernungsschätzen mit sehr großen Fehlern zu rechnen, die auch mit der präzisesten Waffe unweigerlich zu Fehlschüssen führen müssen.

Es gibt bereits Versuche, die Entfernung mit Hilfe des Zielfernrohres selbst einigermaßen genau zu bestimmen. Es sind dies Zielfernrohre mit variabler Vergrößerung, schwenkbarem Innenrohr mit Umkehrsystem und je einer Höhen- und Seitenverstellschraube. Die Entfernungsmessung beruht grundsätzlich darauf, daß man die Größe des Zieles ziemlich genau abschätzen kann und daher kennt (Körpergröße, Rumpflänge, Schulterbreite, Kopfgröße usw.) und diese Meßgröße mit bekannten Strichabständen im Absehen des Zielfernrohres vergleicht. Dabei gibt es wieder <u>zwei Arten von Fernrohren</u> mit variabler Vergrößerung, nämlich solche mit veränderlichem und solche mit konstantem Absehen. Bei den ersteren ist eine Rechnung (Entfernung $=\dfrac{\text{Zielgröße in m x 1000}}{\text{Strichanzahl}}$ ) durchzuführen, bei den letzteren kann mit Hilfe einer Vergrößerungstabelle die Entfernung ermittelt werden.

Es ist klar, daß auch das noch keine für den Ernstfall brauchbaren Lösungen sind, da ja nach der Entfernungsbestimmung erst die Höhenverstelltrommel auf die betreffende Entfernungsmarke eingestellt werden muß. Dazu ist die Waffe vom Anschlag zu nehmen und zurückzuziehen, um die Einstellmarken am Fernrohr ablesen und einstellen zu können, sofern dies bei schlechten Sichtverhältnissen (Dämmerung usw) überhaupt möglich ist. Wenn der Schütze jetzt mit seiner schußbereiten Waffe sein Ziel wieder sucht, wird er in den meisten Fällen feststellen müssen, daß es verschwunden ist und er eine günstige Gelegenheit verpaßt hat.

Alle diese Nachteile vermeidet das erfindungsgemäße Zielfernrohr mit eingebauter Entferungsmessung und automatischer Einstellung der Elevation, da nach dem Vermessen des Zieles, ohne dieses aus dem Blickfeld zu verlieren, sofort der Schuß abgegeben werden kann.

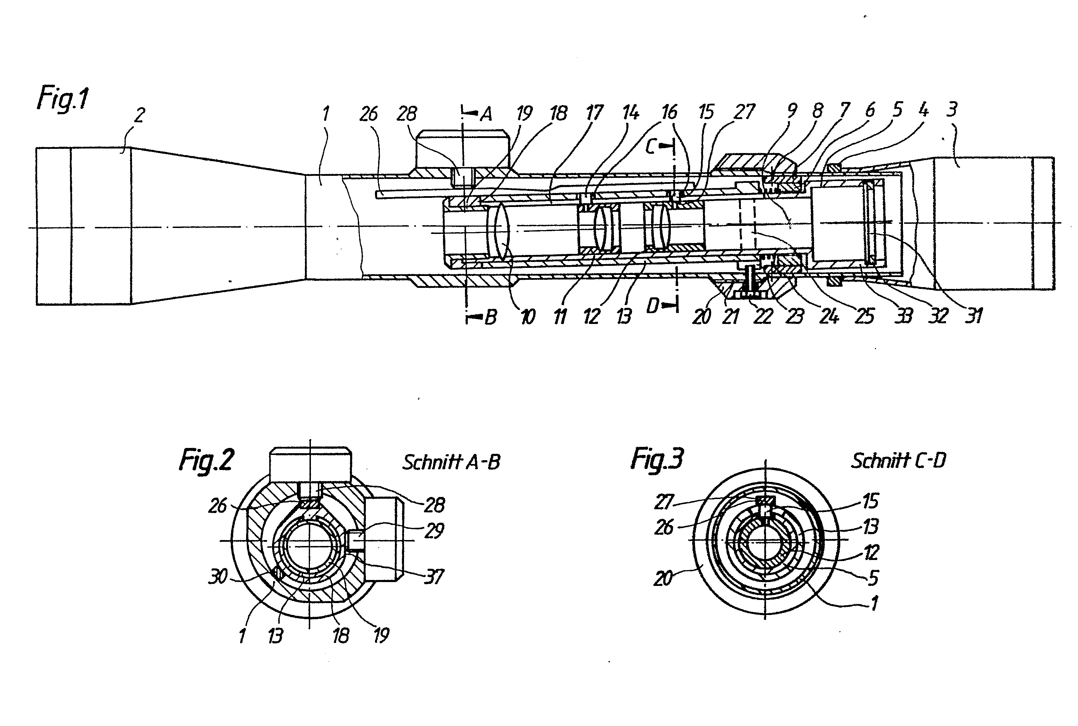

Das Zielfernrohr besteht gem. Fig. 1 aus dem Hauptrohr 1, das in seinem erweiterten Vorderende, wie üblich, das Objektiv-Linsensystem 2 eingeschraubt und auf seinem Hinterende den Okularstutzen 3 mit dem eingebauten Okular-Linsensystem aufgeschraubt hat. Nach individueller Scharfstellung des Absehens 31 wird der Okularstutzen 3 mit dem Feststellring 4 fixiert. Das Innenrohr 5 ist mit einem vulkanisierten Gummiring 6, der den Schwerpunkt 9 bildet, und dem Haltering 7, der mit den Senkschrauben 8 im Hauptrohr 1 befestigt ist, in diesem schwenkbar gelagert. Das Innenrohr 5 stellt die optische Achse dar und ermöglicht so die Justierung des Zielfernrohres der Höhe und Seite nach sowie die Einstellung der für die verschiedenen Entfernungen nötige Elevation. Am Vorderende trägt das Innenrohr 5 eine Sammellinse 10 und in seinem Mittelteil zwei der Länge nach verschiebliche Umkehrlinsensysteme. Das vordere Umkehrlinsensystem 11 mit der vorderen Steuerschraube 14 und das hintere Umkehrlinsensystem 12 mit der hinteren Steuerschraube 15 werden von dem auf dem Innenrohr 5 drehbar gelagerten Kurvenrohr 13 durch zwei getrennte Schlitze 16 gesteuert. Der hintere Schlitz ist schraubenförmig mit konstanter Steigung, der vordere hingegen spiralförmig mit zunehmender Steigung ausgeführt. Die beiden Steuerschrauben 14 und 15 gleiten einerseits in dem Längsschlitz 17 des Innenrohres 5, der keine Drehbewegung sondern nur eine Längsbewegung derselben zuläßt und andererseits in dem vorderen bzw. hinteren Schlitz 16 des Kurvenrohres 13, die die Längsverschiebung bewirken. Bei der Drehung des Kurvenrohres 13 werden die beiden Umkehrlinsensysteme 11 und 12 der Länge nach und relativ zueinander derart verschoben, daß eine variable Vergrößerung des Zielgegenstandes und dessen scharfe Abbildung in die feststehende Okularbildebene zustande kommt. Die Verdrehung des Kurvenrohres 13 erfolgt über einen Stellring 20, der auf dem Gewinde 21 des Hauptrohres 1 aufgeschraubt ist und in den eine Mitnehmerschraube 22 eingeschraubt ist, die durch einen radialen Schlitz 25 des Hauptrohres 1 hindurch nach innen in eine Nut 23 des Kurvenrohres 13 eingreift und dieses mitnimmt.

Am Vorderende des Innenrohres 5 ist der Führungsring 18 verdrehfest aufgeschoben, der die Lagerung und Schwenkung des Innenrohres 5 durch die Höhenverstellschraube 28, die Seitenverstellschraube 29 und die Gegendruck-Plattfeder 30 bewerkstelligt und von der Fixiermuffe 19 festgehalten wird. Die Druckfeder 24 hinter dem Kurvenrohr 13 drückt dieses immer nach vorne gegen den feststehenden Führungsring 18, damit es weder beim Schwenken des Innenrohres 5 noch beim Verdrehen des Stellringes 20 zu einer unerlaubten Längsverschiebung des Kurvenrohres 13 kommen kann.

Das Absehen eines Fernrohres legt die optische Achse fest und soll daher immer in der Mitte des Blickfeldes (Aperturblende) bleiben und scharf zu sehen sein. Damit ferner das Absehen 31 unabhängig von der Vergrößerung immer gleich groß bleibt und so als Meßbasis dienen kann, ist es im hinteren Ende des Innenrohres 5 mit seinem Fassungsring 32 im Innengewinde 33 eingeschraubt. Dort wird es genau in die von den beiden Umkehrlinsen 11 und 12 erzeugte Okularbildebene gebracht und fixiert.

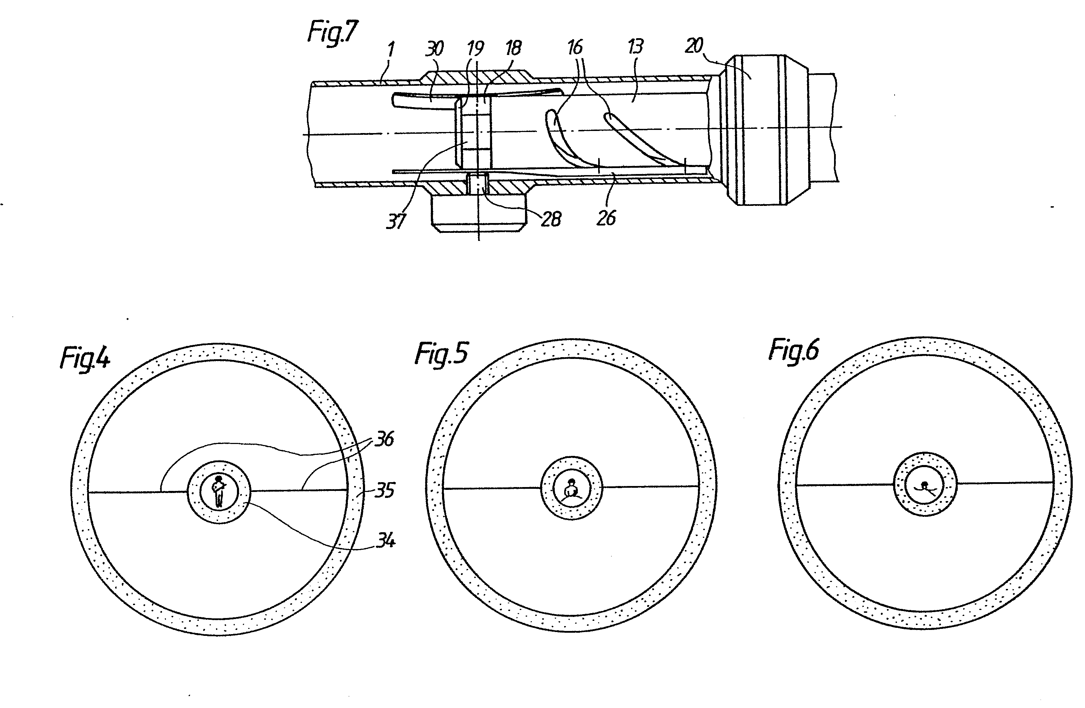

Das erfindungsgemäße Absehen 31 ist in den Fig.4,5 und 6 dargestellt. Es besteht aus einem breiten Kreisring 34, der Aperturblende 35 und den beiden horizontalen Fäden 36, die alle zugleich auf fotografischem Weg auf einem dünnen Glasplättchen hergestellt sind. Das Ringabsehen 34 ist erstens zum Zielen besonders geeignet, da es wie kein anderes Absehen das rasche Erfassen und Zentrieren des Zieles gestattet, ohne daß dieses durch Fäden oder Balken teilweise abgedeckt wird. Zweitens ist es durch seinen breiten Ring bei schlechten Sichtverhältnissen und besonders in der Dämmerung auch dann noch verwendbar, wenn druch einen schwarzen Hintergrund nur noch einzelne unzusammenhängende Ringsegmente zu erkennen sind, da das Auge auch dann noch instinktiv sofort den Ringmittelpunkt findet. Drittens ist das Ringabsehen 34 zum raschen Vermessen des Zielgegenstandes viel besser geeignet als eine Strichplatte oder ein Balkenabsehen, da das Ziel nur in den Ring gebracht werden muß und seine eventuelle Schräglage keine Rolle spielt. Die Aperturblende 35 begrenzt das Blickfeld, so, daß auch bei der größten Ausschwenkung des Innenrohres 5 kein störender Schatten zu sehen ist. Da ferner das Absehen 34 immer in der Mitte des Blickfeldes stehen soll, wird die Aperturblende 35 zweckmäßig zugleich mit dem Ringabsehen 34 hergestellt, wodurch das umständliche Zentrieren der beiden entfällt. Das Absehensplättchen 31 kann dabei im Fassungsring 32, der jetzt kein Blendenring mehr ist, ohne weiteres etwas exzentrisch liegen, da dieser kleine Fehler beim Justieren ausgeschaltet wird. Die beiden horizontalen dünnen Fäden 36 zeigen dem Schützen eine eventuelle Verkantung seiner Waffe sofort an, ohne sein Ziel teilweise zu verdecken.

Die Entfernungsmessung mit dem Zielfernrohr erfolgt erfindungsgemäß so, daß die Vergrößerung des Fernrohres der Entfernung proportional zugeordnet wird. Ist der Faktor f=1, so bedueten eine 3-fache Vergrößerung 300 m, eine 5-fache Vergrößerung 500 m und eine 9-fache Vergrößerung 900 m Entfernung. Ist der Proportionalitätsfaktor kleiner oder größer als 1, dann können die o.a. Vergrößerungen z.B. 150-250-450 m, 200-333-600m, 250-417-750 m oder 400-667-1200 m Entfernung bedeuten. In unserem Beispiel soll ein Zielfernrohr mit einer 3- bis 9-fachen Vergrößerung und der Einfachheit halber ein Faktor f=1 angenommen werden, d.h. das Fernrohr ist für die Entfernungen von 300 bis 900 m ausgelegt. Da das Ringabsehen 34 konstant bleibt, kann es für jede beliebige Zielgröße dimensioniert werden. Für unser Beispiel soll das Ringabsehen 34 für eine "vorlaufende Figur" ausgelegt sein und bekommt daher einen Innendurchmesser von 20 Strich, d.s. knapp 2 m auf 100 m Entfernung. Eine Figur von etwa 1,8 m Größe wird daher gerade in den Absehensring hineinpassen, ohne von diesem irgendwo verdeckt zu werden. Steht diese Figur nun angenommen in 700 m Entfernung, dann erscheint sie 7mal kleiner als auf 100 m und es ist eine 7-fache Vergrößerung notwendig, um sie wieder so groß wie auf 100 m erscheinen zu lassen. Umgekehrt braucht die Figur von bekannter Größe, gleichgültig in welcher Entfernung sie sich befindet, nur so stark vergrößert werden, daß sie gerade in das Ringabsehen 34 paßt, dann kann am Umfang des Stellringes 20 bereits die der Vergrößerung zugeordnete Entfernung abgelesen werden.

Damit die Waffe aber nicht vom Anschlag genommen, die Entfernung abgelesen und auf der Höhenverstelltrommel eingestellt werden muß, ist eine automatische Einstellung der Elevation mit Hilfe der erfindungsgemäßen Kurvenschablone 26 vorgesehen. Die Kurvenschablone 26 ist in den Fig. 1,2,3 und 7 dargestellt. Sie ist mit der hinteren Steuerschraube 15 durch die Befestigungsschraube 27 fest verbunden und macht die Vor-und Rückwärtsbewegung derselben mit. Vorne wird die Kurvenschablone 26 in einer Ausnehmung des Führungsringes 18 seitlich geführt und unter der Höhenverstellschraube 28 durchgeschoben. Dieser vordere Teil der Kurvenschablone 26, der unter der Höhenverstellschraube 28 hindurchgleitet, stellt den eigentlichen Kurventeil dar, der in seienr Höhe an die Ballistik der verwendeten Patrone angepaßt ist und mit die Elevation eingestellt wird. Da der hintere Schlitz 16 des Kurvenrohres 13, in dem die hintere Steuerschraube gleitet, eine Schraubenlinie mit konstanter Steigung darstellt, ist jeder Lage des Stellringes 20, mit dem die Vergrößerung eingestellt wird, eine direkt proportionale Stellung des Kurvenrohres 13 und der hinteren Steuerschraube 15, sowie eine genau definierte Lage der Kurvenschablone 26 mit seiner unter der Höhenverstellschraube 28 liegenden Höhe, die die Elevation bestimmt, zugeordnet. Wenn daher mit dem Stellring 20 für die Entfernungsmessung eine bestimmte Vergrößerung des Zielgegenstandes eingestellt wird, so ist durch die Kurvenschablone 26 automatosch auch die richtige Elevation für die Ballistik der verwendeten Patrone eingestellt. Ohne die Waffe vom Anschlag nehmen zu müssen, kann sofort der Schuß abgegeben werden. Danach kann der Schütze, falls es ihn interessiert, die am Stellring 20 eingravierte Entfernung ablesen, auf die er geschossen hat.

Für das Justieren eines Fernrohres mit schwenkbarem Innenrohr gilt die Regel, daß das Innenrohr immer dorthin geschwenkt werden muß, wohin der Schuß gehen soll. Das bedeutet, daß für die größer werdende Entfernung und Elevation auch das Innenrohr 5 immer stärker nach oben ausgeschwenkt werden muß. Die Kurvenschablone 26 muß daher gem. Fig.1 in ihrem Kurventeil von vorne nach hinten zu immer niedriger werden, damit das Innenrohr 5 von der Gegendruck-Plattfeder 30 hochgedrückt werden kann. Bei dieser Vorwärtsbewegung macht die Kurvenschablone 26, die vorne am höchsten ist, die Aufwärtsbewegung des Innenrohres 5 mit und es besteht bei stärker gekrümmten Flugbahnen und großen Entfernungen die Gefahr, daß die Kurvenschablone 26 mit seinem Vorderende oben an das Hauptrohr 1 anschlägt und verbogen wird.

Um nun eine unerwünschte Vergrößerung des Hauptrohres 1 zu vermeiden und die gedrängten Platzverhältnisse optimal auszunützen, wird das Zielfernrohr, wie in Fig.7 dargestellt, mit seiner bisherigen Unterseite nach oben gedreht, so daß die Höhenverstellschraube 28 nach unten und die Seitenverstellschraube 29 nach links zeigen. Dadurch kehren sich die Größen-und Bewegungsverhältnisse um und es treten ganz überraschende Effekte für die Raumausnützung und Bedienung des Zielfernrohres ein. Die Kurvenschablone 26 ist jetzt vorne am niedrigsten und wird in ihrem Kurventeil nach hinten zu allmählich höher, wodurch bei seiner Vorwärtsbewegung das Innenrohr 5 gegen den Druck der Plattfeder 30 angehoben wird. Da auch jetzt wieder die Kurvenschablone 26 die Schwenkbewegung des Innenrohres 5 mitmacht, entfernt sich das niedere Vorderenede der Kurvenschablone 26 bei der Vorwärtsbewegung vom Hauptrohr 1, sodaß es zu keienr Berührung mehr kommen kann. Außerdem kann die optische Achse des Innenrohres 5 viel besser in der Mitte des Hauptrohres 1 gehalten werden als nach Fig.1 und schließlich ergeben sich überall logische Drehrichtungen an den Verstellschrauben. So wandert z.B.

bei einer Rechtsdrehung der Höhenverstellschraube 28 der Treffpunkt, wie erwartet nach oben und bei einer Rechtsdrehung der Seitenverstellschraube 29, wie erwartet, nach rechts. Die einzige Änderung, die am Zielfernrohr gem.Fig.7 gegenüber dem nach Fig.1 zu machen ist, ist die Verdrehung des Stellringes 20 um 180°, damit die Entfernungsskala von oben abgelesen werden kann. Dazu ist lediglich die Mitnehmerschraube 22 diagonal gegenüber, in der Mitte der Entfernungsskala am Stellring 20 anzuordnen.

Sollte außerdem für die großen Entfernungen noch die automatische Korrektur der Rechtsabweichung der Geschosse durch den Rechtsdrall (Derivation) gewünscht werden, dann ist die für die Seitenverstellschraube 29 vorgesehen Gleitfläche 37 des Führungsringes 18 von oben nach unten derart schrägzustellen, daß bei zunehmender Elevation automatisch eine kleine Linksverschiebung des Innenrohres 5 und damit des Treffpunktes eintritt.

Erfindungsgemäß hat der Scharfschütze demnach nichts anderes zu tun, als sein Ziel anzuvisieren und es immer gleich groß auf die vorgeschriebene Größe in das Ringabsehen 34 zu vergrößern, wie es in Fig.4 mit einer "vorlaufenden Figur", in Fig. 5 mit einer "Brustfigur" und in Fig. 6 mit einer "Kopffigur" dargestellt ist. Danach kann der Schütze sofort den Schuß abgeben, da er das Ziel instinktiv schon in der Mitte des Ringabsehens 34, also im Zielpunkt hat und mit der Einstellung der richtigen Vergrößerung automatisch auch die Elevation für die betreffende Entfernung bereits eingestellt ist. Außerdem kommt dem Schutzen noch zugute, daß nicht nur die Größenverhältnisse des Zielgegenstandes im Ringabsehen 34 gleich bleiben, sondern daß auch das gesamte Blickfeld nach dem Vermessen des Zieles immer konstant ist, ein Umstand, der in gewissen Fällen ebenfalls zur Entfernungsmessung verwendet werden kann. Das alles ist aber darüberhinaus noch bei Sichtverhältnissen möglich, unter denen von einer Vermessung des Zieles mit einer Strichplatte keine

- 9 -

Rede mehr sein kann, und mit einer Schnelligkeit, die bisher unbekannt war.

Damit sich der Schütze über die technischen Daten seines Zielfernrohres ständig im klaren ist, bekommt das Fernrohr die Angaben der vorhandenen Vergrößerung und deren Zuordnung zur Entfernung (z.B. Vergr. 3-9 fach = 200-600m), über die Größe des Ringabsehens 34 (Innendurchmesser in Strich, z.B. d= 30⁻) und für welche Patrone die Kurvenschablone ausgelegt ist (z.B. Kal. 7,62 x 51). Diese Angaben werden zweckmäßig auf einem Klebeetikett gemacht, da mit Ausnahme der eingebauten Vergrößerung alle anderen Angaben verändert werden können.

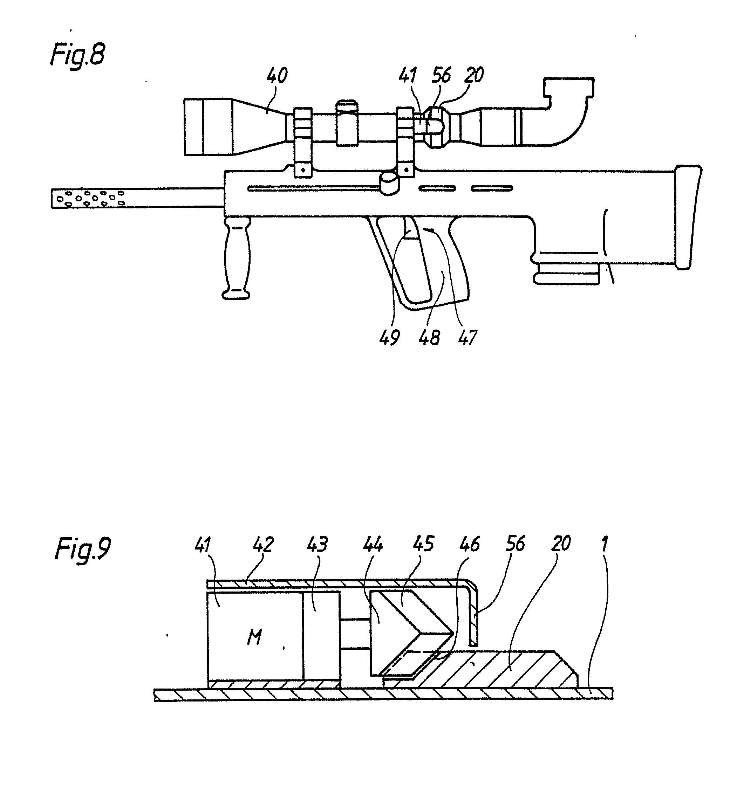

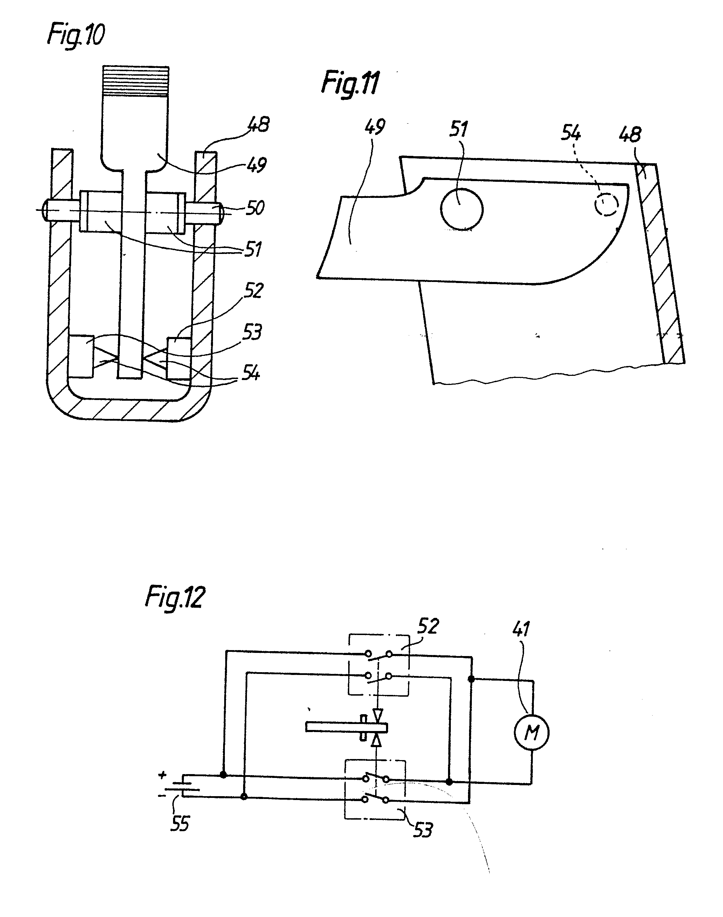

In den Fig. 8 bis 12 ist in einem Ausführungsbeispiel eine weitere vorteilhafte Ausgestaltung der erfindungsgemäßen Zieleinrichtung dargestellt. Fig. 8 zeigt eine mit dem Zielfernrohr ausgerüstete Waffe in Seitenansicht, Fig. 9 die vergrößerte Darstellung einer Detailansicht im Schnitt ,und die Fig. 10,11 Schnitte durch die Abzugsvorrichtung. Fig. 12 zeigt schematisch eine Schaltung für die Steuerung des Stellmotors.

Die zuvor beschriebene Zieleinrichtung für Scharfschützengewehre weist imemr noch den Nachteil auf, daß eine der beiden Hände des Schützen für die Verstellung der Zieleinrichtung benötigt wird, wobei die Waffe nicht abschußbereit gehalten werden kann. Dieses Problem wird gemäß vorliegender Erfindung dadurch gelöst, daß die Einstellung der erforderlichen Elevation durch einen Motor erfolgt, der von einem oder mehreren Schaltern an der Abzugseinrichtung gesteuert wird.

In Fig. 8 ist am Fernrohr 40 seitlich ein Motor 41 nahe am Stellring 20 angeflanscht.

- 10 -

Wie der Fig. 9 zu entnehmen ist, ist der Motor 41 mittels der Schelle 42 am Hauptrohr 1 befestigt. Über ein Getriebe 43 wird ein Ritzel 44 angetrieben. Das Ritzel 44 greift mit seinen Zähnen 45 in einen Zahnradkranz des Stellringes 20 ein. Durch Drehen des Motors 41 in eine der beiden Richtungen wird der Stellring 20 in die jeweils entsprechende Richtung gedreht und dadurch die Entfernungsmessung bzw. Einstellung der erforderlichen Elevation durchgeführt.

Da in dem vorliegenden Ausführungsbeispiel der Stellring 20 mittels eines Gewindes auf dem Hauptrohr 1 aufgeschraubt ist, führt der Stellring 20 in Längsrichtung des Hauptrohres 1 eine geringe Längsverschiebung aus. Diese Längsverschiebung ist durch die entsprechend tiefe Ausbildung der Zähne 45 des Ritzels 44 und des Zahnradkranzes 46 ausgeglichen.

Das Ritzel kann auch anders ausgeführt sein, z.B. können die Zähne radial angeordnet sein, wobei der Zahnradkranz des Stellringes 20 dann ebenfalls radial angeordnete Zähne aufweisen muß. Damit sind größere Längsverschiebungen des Stellringes 20 überbrückbar.

Der dargestellte Motor 41 wird elektrisch betrieben. Im Rahmen der Erfindung können auch anders angetriebene Motoren, z.B. Hydraulikmotoren, Anwendung finden.

Die Fig.10,11 zeigen die Abzugsvorrichtung in zwei Schnittansichten, wobei diese Zeichnungen nicht maßstäblich und nur schematisch gehalten sind.

Gemäß Erfindung erfolgt die Steuerung des Motors 41 durch Schalter, die an der Abzugseinrichtung angeordnet sind. Bei dem vorliegenden Ausführungsbeispiel sind die Schalter in besonders bevorzugter Weise mit dem Abzugshahn verbunden. Damit kann der Schütze lediglich durch seitliches Verschwenken des Hahnes den Motor 41 in jede der beiden Drehrichtungen steuern, bis die richtige Elevation eingestellt und die richtige Entfernung angezeigt ist.

Die Abzugseinrichtung ( Bezugszeichen 47 in Fig.8) umfaßt den Griff 48 und den Hahn 49. Der Hahn 49 ist im Griff 48 um die Achse 50 drehbar gelagert. Die Achse 50 ist über Gummielemente 51 mit dem Hahn 49 fest verbunden. Die Gummielemente haben die Wirkung, den Hahn in seiner Stellung innerhalb des Griffes 48 definiert zu halten. Bei Kraftanwendung seitlich auf den Hahn 49 (mit dem Abzugsfinger) kann der Hahn jedoch in beide Richtungen leicht verschwenkt werden.

Seitlich an dem Hahn sind zwei Schalter 52,53 angeordnet. Die Schalter sind im Griff 48 befestigt und die beiden Schaltglieder 54 liegen am Hahn 49 an.

Beim Verschwenken des Hahnes 49 gegen die Richtkraft der Gummielemente 51 wird der eine oder andere Schalter betätigt, um so den Motor 41 in die jeweils gewünschte Drehung zu versetzen.

Fig. 12 zeigt eine Schaltung, wie sie für die Verbindung der Abzugseinrichtung 47 mit dem Motor 41 vorteilhaft ist. Die Batterie 55 speist die Schaltanordnung. Der Hahn 49 betätigt die beiden Schalter 52, 53 und diese schalten wahlweise die entsprechende Polarität des Motors 41.

Die Abzugseinrichtung ist in den Fig. 10,11 nur schematisch dargestellt. So fehlen beispielsweise die erforderlichen Ausbildungen der weiteren Abzugskonstruktion für die Schußabgabe. Die seitliche Verschwenkbarkeit des Hahnes 49 kann durch andere Maßnahmen gegeben sein. So kann die Achse 50 fest mit dem Hahn 49 verbunden sein (ohne Zwischenschaltung von Gummielementen), und die Lagerung der

- 12 -

Achse 50 erfolgt in Ausnehmungen des Griffes 48, die für das
Verschwenken genügend Spiel haben. Die Richtkraft für das zentrierte
Einstellen des Hahnes 49 kann von zusätzlichen Federn oder von
den Stellfedern der Schalter 52,53 aufgebracht werden.

Bei dem Ausführungsbeispiel gemäß Fi.g 8,9 erfolgt die Entfernungseinstellung über den Motor 41 und das Ritzel 44. Das Ritzel 44 ist
durch eine Abdeckhaube 56 abgedeckt, um unabsichtliches Berühren
des Ritzels oder Verschmutzung zu vermeiden.

Bei versagen des Motors 41 kann der Stellring 20 wie oben beschrieben auch mit der Hand betätigt werden, sodaß die Funktionsfähigkeit der Waffe gewährleistet bleibt. In bevorzugter Weise
ist die Antriebseinrichtung als Einheit an-und abmontierbar.

In Abänderung des dargestellten Ausführungsbeispieles kann der
Motor 41 auch direkt und ohne Zwischenschaltung des Stellringes 20
auf das Kurvenrohr 13 wirken. Vorteilhaft wird dann aber zusätzlich
der Stellring 20 ebenfalls vorgesehen, um notfalls eine Handbetätigung vornehmen zu können.

Die Batterie 55 zur Speisung des Motors 41 wird in vorteilhafter
Weise im Gewehrschacht oder im Griff 48 untergebracht. Diese Batterie
kann auch für eine elektrische Zündung der Gewehrpatronen herangezogen werden.

- 1 -

PATENTANSPRÜCHE :

1. Zielfernrohr für Scharfschützengewehre mit einem in an sich bekannter Weise schwenkbarem Innenrohr mit variabler Vergrößerung und konstantem Absehen, dadurch gekennzeichnet, daß in das konstant bleibende Ringabsehen (34) ein Zielgegenstand von bekannter Größe mit Hilfe der variablen Vergrößerung, die einer bestimmten Entfernung zugeordnet ist, immer gleich groß hineinvergrößerbar ist und daß die dadurch gegebene Entfernungsmessung an einem Stellring (20) ablesbar ist.

2. Zielfernrohr nach Anspruch 1, dadurch gekennzeichnet, daß das Ringabsehen (34) aus einem breiten, auch in der Dämmerung gut sichtbaren Kreisring besteht, der sowohl das Vermessen als auch das Zentrieren des Zielgegenstandes in den Zielpunkt (Kreismittelpunkt) gestattet.

3. Zielfernrohr nach Anspruch 1 oder 2, dadurch gekennzeichnet, daß die Aperturblende (35) zugleich mit dem Ringabsehen (34) auf einem dünnen Glasplättchen hergestellt ist, um die Zentrierung zwischen den beiden zu gewährleisten.

4. Zielfernrohr nach einem der vorhergehenden Ansprüche, dadurch gekennzeichnet, daß das Ringabsehen (34) und die Aperturblende (35) mit zwei dünnen horizontalen Fäden (36) verbunden sind, um dem Schützen eine eventuelle Verkantung der Waffe anzuzeigen.

5. Zielfernrohr nach einem der vorhergehenden Ansprüche, dadurch gekennzeichnet, daß das Ringabsehen (34) bei jeder möglichen Zuordnung der Vergrößerung an die Entfernung in seiner Größe, mit seinem Innendurchmesser als Meßbasis, an jede beliebige Zielgröße anpaßbar und im Zielfernrohr austauschbar ist.

6. Zielfernrohr nach einem der vorhergehenden Ansprüche, dadurch gekennzeichnet, daß eine Kurvenschablone (26) vorgesehen ist, mittels der mit der Entfernungsmessung automatisch auch die Einstellung der erforderlichen Elevation erfolgt.

7. Zielfernrohr nach Anspruch 6, dadurch gekennzeichnet, daß die Kurvenschablone (26) mit ihrem Kurventeil an die Ballistik der verwendeten Patrone anpaßbar und im Zielfernrohr austauschbar ist.

8. Zielfernrohr nach einem der vorhergehenden Ansprüche, dadurch gekennzeichnet, daß durch die entsprechende Schrägstellung der für die Seitenverstellschraube (29) vorgesehenen Gleitfläche (37) des Führungsringes (18) die automatische Korrektur der Rechtsabweichung der Geschosse durch den Rechtsdrall (Derivation) gegeben ist.

9. Zielfernrohr nach einem der vorhergehenden Ansprüche, dadurch gekennzeichnet, daß die Verdrehung des Kurvenrohres (13) und damit die Längsverschiebung des Innenrohres (5) zur Einstellung der Elevation durch einen Motor (41) erfolgt.

10. Zielfernrohr nach Anspruch 9, dadurch gekennzeichnet, daß der Motor ein Elektromotor ist, dessen Drehrichtung frei wählbar is.

11. Zielfernrohr nach Anspruch 10, dadurch gekennzeichnet, daß der Motor durch eine Schaltvorrichtung am Griff (48) gesteuert ist.

12. Zielfernrohr nach Anspruch 11, dadurch gekennzeichnet, daß als Schaltvorrichtung der Hahn (49) seitlich schwenkbar ausgebildet ist und daß Schalter (52,53) vorgesehen sind, die durch die Verschwenkung des Hahnes (49) schaltbar sind.

13. Zielfernrohr nach Anspruch 12, dadurch gekennzeichnet, daß der Hahn (49) an Gummielementen (51) gelagert ist.

14. Zielfernrohr nach einem der vorhergehenden Ansprüche, dadurch gekennzeichnet, daß die Drehkraft des Motors (41) auf den Stellring (20) übertragbar ist.

15. Zielfernrohr nach Anspruch 14, dadurch gekennzeichnet, daß der Stellring (20) einen Zahnkranz (46) zum Eingriff der Zähne (45) eines Ritzels (44) des Motors (41) aufweist.

16. Zielfernrohr nach Anspruch 15, dadurch gekennzeichnet, daß das Ritzel (44) von einer Abdeckung (56) nach außen abgedeckt ist.

0234180

Fig.1

Fig.2 — Schnitt A-B

Fig.3 — Schnitt C-D

Fig.7

Fig.4    Fig.5    Fig.6

0234180

0234180

Fig.8

40    41  56  20

49  48  47

Fig.9

41    42    43    44    45    46    56    20    1

M

**Fig.10**

48
49
50
51
52
53
54

**Fig.11**

49   51   54   48

**Fig.12**

52   41

55   53

# EUROPÄISCHER RECHERCHENBERICHT

| | EINSCHLÄGIGE DOKUMENTE | | EP 86890349.3 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE - A1 - 2 207 323 (OUTDOORSPORTS INDUSTRIES, INC.)<br><br>* Seite 2, 3. Absatz - Seite 3, 1. Absatz; Seite 7, 3. Absatz, Seite 9, 2. Absatz - Seite 10, 2. Absatz; Seite 12, 2. Absatz, Seite 13; Fig. 1-7 *<br><br>-- | 1,5,6, 7 | F 41 G 1/38<br>G 02 B 23/00 |
| X | DE - C - 498 191 (HERMANN GERLICH)<br>* Gesamt *<br><br>-- | 2,3,4 | |
| X | CH - A - 180 989 (AKTIENGESELLSCHAFT C.P.GOERZ OPTISCHE ANSTALT)<br>* Gesamt *<br><br>-- | 1,2 | |
| A | DE - B - 1 203 975 (REDFIELD GUN SIGHTCOMPANY)<br>* Gesamt *<br><br>-- | 1-4 | RECHERCHIERTE SACHGEBIETE (Int. Cl.4) |
| A | US - A - 3 782 822 (MACK L. SPENCE)<br>* Gesamt *<br><br>-- | 1-4,6 | F 41 G 1/00<br>G 02 B 23/00 |
| A | US - A - 3 492 733 (J.M.LEATHER WOOD)<br>* Gesamt *<br><br>-- | 1-4,6 | |
| A | US - A - 3 097 432 (GEORGE R. SHAW)<br>* Gesamt *<br><br>---- | 1-4,6 | |

Der vorliegende Recherchenbericht wurde für alle Patentansprüche erstellt.

| Recherchenort | Abschlußdatum der Recherche | Prüfer |
|---|---|---|
| WIEN | 30-04-1987 | KALANDRA |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82